# EUROPEAN PATENT APPLICATION

(11) **EP 4 510 676 A1**
(43) Date of publication of application: **19.02.2025**
(21) Application number: 23794949.0
(22) Date of filing: 31.03.2023
(51) Int. Cl.: H04W 16/28

(54) **BEAM MANAGEMENT METHOD, BASE STATION, USER APPARATUS, STORAGE MEDIUM, AND PROGRAM PRODUCT**

(30) Priority: 28.04.2022 CN 202210461130
(71) Applicant: ZTE Corporation, Shenzhen, Guangdong 518057 (CN)
(72) Inventor: LIU, Wenfeng, Shenzhen, Guangdong 518057 (CN); XIAO, Huahua, Shenzhen, Guangdong 518057 (CN); LU, Zhaohua, Shenzhen, Guangdong 518057 (CN); ZHENG, Guozeng, Shenzhen, Guangdong 518057 (CN); WANG, Yuxin, Shenzhen, Guangdong 518057 (CN)
(74) Representative: Betten & Resch
(86) International application number: PCT/CN2023/085594
(87) International publication number: WO 2023/207514

(57) **Abstract**

Disclosed in the present application are a beam management method and an apparatus therefor, and a storage medium and a program product. The beam management method is used for a transmitting apparatus, and comprises: configuring reference signal resources in at least some of all the beam sending directions, so as to obtain a plurality of target test beams; sending the plurality of target test beams to a receiving apparatus; receiving beam measurement information, which is sent by the receiving apparatus, wherein the beam measurement information is obtained by means of the receiving apparatus measuring the reference signal resources; performing prediction according to the beam measurement information, so as to obtain an optimal beam result; and sending optimal receiving mode information to the receiving apparatus according to the optimal beam result, wherein the optimal receiving mode information corresponds to the optimal beam result.

## Description

### CROSS-REFERENCE TO RELATED APPLICATION

This application is filed on the basis of Chinese patent application No. 202210461130.X filed on April 28, 2022, and claims priority to the Chinese patent application, the entire contents of which are incorporated herein by reference.

### TECHNICAL FIELD

The present disclosure relates to the technical field of communication, and in particular, to a method for beam management, a base station, a user apparatus, a computer storage medium, and a computer program product.

### BACKGROUND

Currently, a target beam in a related technology is selected from a predetermined analog beam codebook. In other words, beam sweeping is performed on all transmitting and receiving beam pairs in the codebook to determine the target beam, which is a common beam training scheme at present. However, all beams in the codebook need to be swept to determine the target beam, leading to excessive beam training overhead, measurement power consumption, and processing latency in actual application scenarios.

### SUMMARY

The following is an overview of subject matters described in detail herein. The overview is not intended to limit the protection scope of the claims.

Provided are a method for beam management, a base station, a user apparatus, a computer storage medium, and a computer program product in some embodiments of the present disclosure, which can reduce beam training overhead, measurement power consumption, and processing latency.

In accordance with a first aspect of the present disclosure, a method for beam management is provided. The method is applied to a transmitting apparatus, and includes:
configuring reference signal resources in at least part of all beam transmission directions to obtain a plurality of target test beams;
transmitting the plurality of target test beams to a receiving apparatus;
receiving beam measurement information transmitted by the receiving apparatus, where the beam measurement information is obtained by measuring the reference signal resources by the receiving apparatus;
predicting an optimal beam result according to the beam measurement information; and
transmitting optimal Receiving Mode Information (RMI) to the receiving apparatus according to the optimal beam result, where the optimal RMI corresponds to the optimal beam result.

In accordance with a second aspect of the present disclosure, a method for beam management is provided. The method is applied to a receiving apparatus, and includes:
receiving a plurality of target test beams and, Transmission Mode Information (TMI) about reference signal resources transmitted by a transmitting apparatus, where the plurality of target test beams are obtained by configuring the reference signal resources in at least part of all beam transmission directions by the transmitting apparatus;
measuring, according to the TMI about the reference signal resources, the reference signal resources to obtain beam measurement information;
predicting an optimal beam result according to the beam measurement information; and
transmitting optimal parameter information to the transmitting apparatus according to the optimal beam result, where the optimal parameter information corresponds to the optimal beam result.

In accordance with a third aspect of the present disclosure, a base station is provided. The base station includes: at least one processor; and at least one memory configured to store at least one program; where the at least one program, when executed by the at least one processor, causes the at least one processor to implement the method described in the first aspect.

In accordance with a fourth aspect of the present disclosure, a user apparatus is provided. The user apparatus includes: at least one processor; and at least one memory configured to store at least one program; where the at least one program, when executed by the at least one processor, causes the at least one processor to implement the method described in the second aspect.

In accordance with a fifth aspect of the present disclosure, a computer-readable storage medium is provided. The computer-readable storage medium stores a processor-executable program which, when executed by a processor, causes the processor to implement any one of the methods as described above.

In accordance with a sixth aspect of the present disclosure, a computer program product is provided. The computer program product includes a computer program, or a computer instruction stored in a computer-readable storage medium which, when read from the computer-readable storage medium and executed by a processor of a computer device, causes the computer device to implement any one of the methods as described above.

According to the embodiments of the present disclosure, the transmitting apparatus transmits, to the receiving apparatus, a plurality of target test beams for which reference signal resources are configured. Since the plurality of target test beams are obtained by configuring the reference signal resources in at least part of all beam transmission directions, that is, there is no need to perform beam sweeping configuration in all the beam transmission directions to obtain the target test beam, it is conducive to reducing beam training overhead and corresponding measurement power consumption and processing latency. Then, beam measurement information obtained by measuring the reference signal resources by the receiving apparatus is received. The beam measurement information is used for assisting the transmitting apparatus in predicting an accurate and reliable optimal beam result. Moreover, optimal RMI corresponding to the optimal beam result is transmitted to the receiving apparatus, such that the receiving apparatus does not need to perform a sweeping process for the optimal beam result, thereby filling technical gaps in related methods.

The preceding embodiments and other aspects of the present disclosure and implementations thereof are described in more detail in the drawings, detailed description, and claims.

### BRIEF DESCRIPTION OF DRAWINGS

FIG. 1 is a schematic diagram of an environment where a method for beam management according to an embodiment of the present disclosure may be carried out;
FIG. 2 is a flowchart of a method for beam management according to an embodiment of the present disclosure;
FIG. 3 is a flowchart of obtaining a plurality of target test beams in a method for beam management according to an embodiment of the present disclosure;
FIG. 4 is a flowchart of transmitting optimal RMI to a receiving apparatus in a method for beam management according to an embodiment of the present disclosure;
FIG. 5 is a flowchart of a method for beam management according to another embodiment of the present disclosure;
FIG. 6 is a flowchart of measuring reference signal resources to obtain beam measurement information in a method for beam management according to an embodiment of the present disclosure;
FIG. 7 is a flowchart of transmitting optimal parameter information to a transmitting apparatus in a method for beam management according to an embodiment of the present disclosure;
FIG. 8 is a schematic diagram of a base station according to an embodiment of the present disclosure; and
FIG. 9 is a schematic diagram of a user apparatus according to an embodiment of the present disclosure.

### DETAILED DESCRIPTION

In order to make the objectives, technical methods, and advantages of the present disclosure clear, the present disclosure is described in further detail below in conjunction with the accompanying drawings and embodiments. It should be understood that specific embodiments described herein are intended to illustrate the present disclosure and not to limit the present disclosure.

It is to be noted, although logical orders have been shown in the flowcharts, in some cases, the operations shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

Provided are a method for beam management, a base station, a user apparatus, a computer storage medium, and a computer program product in some embodiments of the present disclosure. In an embodiment, a method for beam management is provided. The method is applied to a transmitting apparatus, and includes: configuring reference signal resources in at least part of all beam transmission directions to obtain a plurality of target test beams; transmitting the plurality of target test beams to a receiving apparatus; receiving beam measurement information transmitted by the receiving apparatus, where the beam measurement information is obtained by measuring the reference signal resources by the receiving apparatus; predicting an optimal beam result according to the beam measurement information; and transmitting optimal RMI to the receiving apparatus according to the optimal beam result, where the optimal RMI corresponds to the optimal beam result. In this embodiment, a plurality of target test beams, for which reference signal resources are configured, are transmitted to the receiving apparatus. Since the plurality of target test beams are obtained by configuring the reference signal resources in at least part of all beam transmission directions, that is, there is no need to perform beam sweeping configuration in all the beam transmission directions to obtain the target test beams, it is conducive to reducing beam training overhead and corresponding measurement power consumption and processing latency. Then, beam measurement information obtained by measuring the reference signal resources by the receiving apparatus is received. The beam measurement information is used for assisting the transmitting apparatus in predicting an accurate and reliable optimal beam result. Moreover, optimal RMI corresponding to the optimal beam result is transmitted to the receiving apparatus, such that the receiving apparatus does not need to perform a sweeping process for the optimal beam result, thereby filling technical gaps in related methods.

The embodiments of the present disclosure are further described below in conjunction with the accompanying drawings.

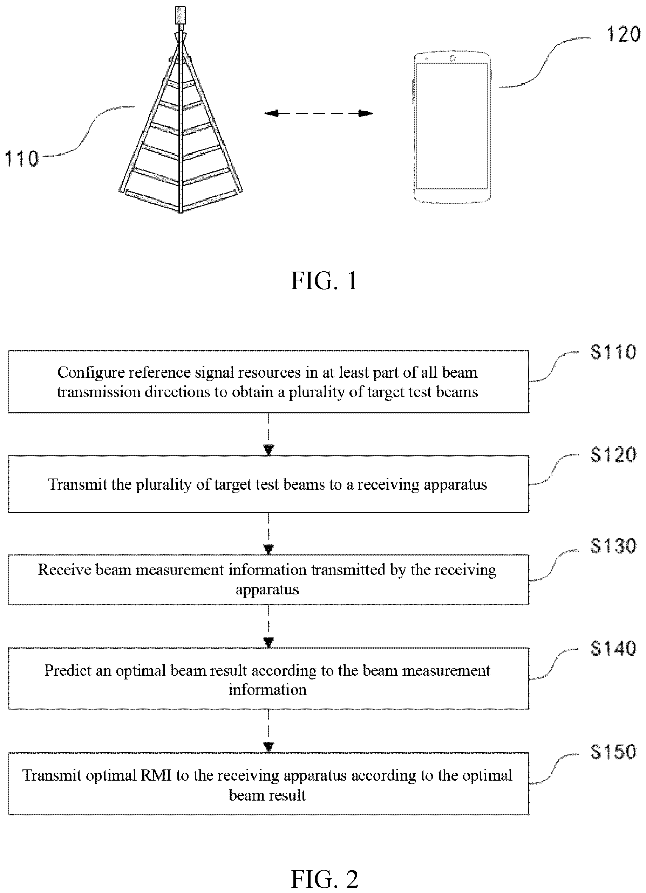

FIG. 1 is a schematic diagram of an environment in which a method for beam management according to an embodiment of the present disclosure may be carried out.

In an example of FIG. 1, the implementation environment includes a base station 110 and a user apparatus 120. A wireless signal may be transmitted and received between the base station 110 and the user apparatus 120.

It is to be noted that relative positions of the base station 110 and the user apparatus 120 may be set accordingly in a specific application scenario. For example, the user apparatus 120 may move along a radiation sphere formed by the base station 110 when radiating signals to the outside. In other words, if there are a plurality of user apparatuses 120 and different user apparatuses 120 are configured in the above manner, wireless signals transmitted by the base station 110 can be received at different spatial positions. It is to be noted that spatial positions herein may be different geographical conditions.

In an implementation, the user apparatus 120 may be referred to as an access terminal device, a User Equipment (UE), a subscriber unit, a subscriber station, a mobile radio station, a mobile station, a remote station, a remote terminal device, a mobile device, a user terminal device, a wireless communication device, or a user agent. For example, the user apparatus 120 may be a cellular phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device for 5G networks or future 5G+ networks, or the like, which is not limited in this embodiment.

The base station 110 has at least functions such as beam management based on preset operating logic or beam management based on control of an operator. For example, the base station 110 has at least functions such as predicting and managing an optimal beam result, that is, functions of configuring reference signal resources in at least part of all beam transmission directions based on preset operating logic or based on control of an operator to obtain a plurality of target test beams, and transmitting the plurality of target test beams to the user apparatus 120 to facilitate the user apparatus 120 to receive beam measurement information obtained by the base station 110 by measuring the reference signal resources, predicting an optimal beam result based on the beam measurement information, and transmitting optimal Receiving Mode Information (RMI) corresponding to the optimal beam result to the user apparatus 120. It is to be noted that the base station 110 may be a general mobile communication base station or a millimeter wave Active Antenna System (AAS) base station, which is not limited herein.

The user apparatus 120 has at least functions such as receiving a plurality of target test beams and Transmission Mode Information (TMI) about reference signal resources transmitted by the base station 110, measuring, according to the TMI, the reference signal resources to obtain beam measurement information, predicting an optimal beam result based on the beam measurement information, and transmitting optimal parameter information corresponding to the optimal beam result to the base station 110. The plurality of target test beams are obtained by configuring reference signal resources in at least part of all beam transmission directions by the base station 110.

In an implementation, when the receiving apparatus is the base station 110, the user apparatus 120 has at least a function of receiving a target reference signal from the base station 110 and transmitting the target reference signal to the base station 110 by means of a target codebook. For example, in response to an operation of the operator on the user apparatus 120, a target reference signal is received from the user apparatus 120, and the target reference signal is transmitted to the base station 110 by means of the target codebook, or a target reference signal from the base station 110 is received, and the target reference signal is transmitted to the user apparatus 120 by means of the target codebook.

It is to be noted that the above functions of the base station 110 and the user apparatus 120 may be applied to different application scenarios, which is not limited herein.

Those having ordinary skills in the art may understand that the implementation environment may be applied to 5G and 6G communication network systems and subsequently evolved mobile communication network systems, which is not limited in this embodiment.

Those having ordinary skills in the art may understand that the implementation environment shown in FIG. 1 does not limit the embodiments of the present disclosure, which may include more or fewer components than those shown in the figure, a combination of some components, or different arrangements of the components.

Based on the above implementation environment, various embodiments of the method for beam management of the present disclosure are proposed below.

FIG. 2 is a flowchart of a method for beam management according to an embodiment of the present disclosure. The method for beam management is applied to a transmitting apparatus, for example, the base station 110 in the embodiment shown in FIG. 1. As shown in FIG. 2, the method may include, but not limited to, the following operations S110 to S150.

At S110, reference signal resources are configured in at least part of all beam transmission directions to obtain a plurality of target test beams.

In this operation, for the transmitting apparatus, the plurality of target test beams are obtained by configuring the reference signal resources in at least part of all the beam transmission directions, that is, there is no need to perform beam sweeping configuration in all the beam transmission directions to obtain the target test beams. Therefore, it is conducive to reducing beam training overhead on the side of the transmitting apparatus and power consumption and processing latency for measuring the target test beams in a subsequent operation.

It is to be noted that the transmitting apparatus may have a plurality of beam transmission directions, which is determined by preset operating logic or based on control of the operator. When the transmitting apparatus has determined all the beam transmission directions, the transmitting apparatus may select at least part of the beam transmission directions. In other words, configuration may be performed in two cases where part or all of the beam transmission directions are selected to obtain the plurality of target test beams. The two configuration cases will be described in subsequent embodiments, which are not described in detail herein.

It is to be noted that the plurality of target test beams may be different from one another to simulate different beam sweeping situations. A specific number of the target test beams may be set according to an actual application scenario, which is not limited herein.

It is to be noted that the reference signal resources include at least one of:
Channel State Information Reference Signal (CSI-RS) resources; or
Synchronization Signal and Physical Broadcast Channel (PBCH) Block (SSB) resources.

In other words, the configured reference signal resources may be CSI-RS resources or/and SSB resources. Measurement of transmitting beams and sweeping of receiving beams are implemented by configuring the above resources. The CSI-RS resources and the SSB resources are well known to those having ordinary skills in the art, which are not described in detail herein.

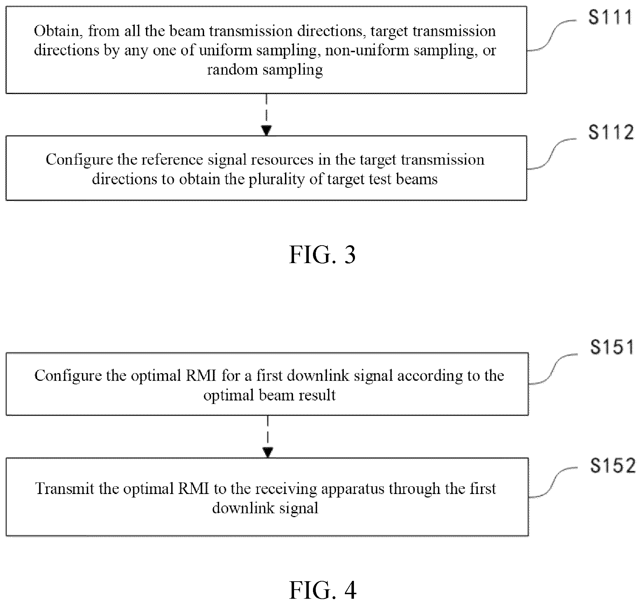

As shown in FIG. 3, in an embodiment of the present disclosure, when the reference signal resources are configured in part of all the beam transmission directions, S110 may include, but not limited to, the following operations S111 to S112.

At S111, target transmission directions are obtained from all the beam transmission directions by any one of uniform sampling, non-uniform sampling, or random sampling.

At S112, the reference signal resources are configured in the target transmission directions to obtain the plurality of target test beams.

In this operation, since the reference signal resources are not configured in all the beam transmission directions, there is a need to determine some target transmission directions from all the beam transmission directions. In other words, the target transmission directions are accurately obtained by any one of uniform sampling, non-uniform sampling, or random sampling, and then the reference signal resources can be configured in the target transmission directions to obtain the plurality of target test beams.

At S120, the plurality of target test beams are transmitted to a receiving apparatus.

It is to be noted that the transmitting apparatus in this embodiment may be, but not limited to, the base station 110 in the embodiment shown in FIG. 1, and the receiving apparatus in this embodiment may be, but not limited to, the user apparatus 120 in the embodiment shown in FIG. 1. Alternatively, those having ordinary skills in the art may selectively set the corresponding transmitting apparatus or receiving apparatus according to an actual application scenario, which is not limited in this embodiment. In order to more conveniently describe the application scenarios and principles of the present disclosure, the following relevant embodiments are described with the base station as the transmitting apparatus and the user apparatus as the receiving apparatus. However, this should not be understood as a limitation to the embodiments of the present disclosure.

In this operation, since the base station has obtained the plurality of target test beams by configuring the reference signal resources at S110, the plurality of target test beams may be transmitted to the user apparatus at S120, such that the user apparatus performs beam sweeping according to the received target test beams in a subsequent operation, to measure the reference signal resources.

It is to be noted that beam sweeping may refer to a process in which the base station or the user apparatus sequentially uses different analog beams to cover a spatial region. During the beam sweeping, the base station or the user apparatus sequentially transmits beams from an entire codebook or a subset of the codebook to find satisfactory transmitting and receiving beam pairs for data and control channels. For example, during beam sweeping at a transmitting end, the base station may, but not limited to, configure higher-layer parameter resource sets *NZP-CSI-RS-ResourceSet,* where each resource set includes a plurality of CSI-RS or/and SSB resources transmitted by means of different transmitting beams, and the user apparatus may use fixed receiving beams to receive and measure the CSI-RS or/and SSB resources to complete the measurement of transmitting beams. In addition, the user apparatus may receive, in a Round Robin manner, the target test beams transmitted by the base station. That is, for the base station, the CSI-RS resources or sets for beam management are repeatedly transmitted multiple times. The user apparatus uses different receiving beams to receive such resources, thereby achieving sweeping of the receiving beams.

In another implementation, during sweeping of the receiving beams, the base station configures higher-layer parameter resource sets *NZP-CSI-RS-ResourceSet,* where each resource set includes a plurality of CSI-RS or/and SSB resources transmitted by means of the same transmitting beam. In this case, the user apparatus may, but not limited to, use different receiving beams to receive and measure the CSI-RS or/and SSB resources to achieving sweeping of the receiving beams. In addition, the base station may transmit the target test beams in a Round Robin manner according to requirements, that is, configure a plurality of CSI-RS resource or/and SSB resource sets transmitted by means of different transmitting beams, so as to achieve sweeping of the transmitting beams.

At S130, beam measurement information transmitted by the receiving apparatus is received.

It is to be noted that the beam measurement information is obtained by measuring the reference signal resources by the receiving apparatus.

In this operation, since the target test beams configured with the reference signal resources have been transmitted to the user apparatus at S120, the user apparatus can measure the reference signal resources according to the received target test beams to obtain corresponding beam measurement information, and transmit the beam measurement information to the base station, so as to facilitate the base station to predict an optimal beam result according to the beam measurement information in a subsequent operation to enhance accuracy of the base station in predicting the optimal beam result.

It is to be noted that the beam measurement information includes at least one of:
index information of the reference signal resources;
parameter information of the target test beams; or
RMI about the reference signal resources.

It is to be noted that the index information of the reference signal resources represents index information of the measured reference signal resources selected by the user apparatus, and is used to inform the base station of the related reference signal resources involved; the parameter information of the target test beams represents parameter information of the corresponding target test beams selected by the user apparatus, and is used to inform the base station of the parameter information of the related target test beams involved; and the RMI about the reference signal resources represents a method in which the user apparatus receives the measured reference signal resources.

In an implementation, when the beam measurement information includes the parameter information of the target test beams, the parameter information of the target test beams includes at least one of:
Reference Signal Receiving Power (RSRP);
Reference Signal Receiving Quality (RSRQ);
receiving signals of the reference signal resources;
Signal to Noise Ratio (SNR);
Signal to Interference plus Noise Ratio (SINR); or
Channel State Information (CSI).

It is to be noted that the parameter information of the target test beams listed above is merely an example. In other words, those having ordinary skills in the art may set less or more specific content of the parameter information of the target test beams in a specific application scenario, which is not limited herein.

In an implementation, when the beam measurement information includes the RMI about the reference signal resources, the RMI about the reference signal resources includes at least one of:
receiving beam index information corresponding to the plurality of target test beams;
absolute receiving beam direction information corresponding to the plurality of target test beams;
relative receiving beam direction information corresponding to the plurality of target test beams; or
receiving beam pattern information corresponding to the plurality of target test beams.

It is to be noted that the RMI about the reference signal resources represents relevant information of a receiving beam used by the user apparatus, that is, the user apparatus reports information such as a direction, an index, and a pattern of the receiving beam to the base station to facilitate the base station to perform beam prediction based on the information. The receiving beam index information represents an index or identification number of the receiving beam used by the user apparatus. The absolute receiving beam direction information may be, but not limited to, information such as a specific position, coordinates, and an angle of the receiving beam in spatial domain. The relative receiving beam direction information represents an angle difference between the receiving beam and a preset baseline direction or an angle difference between the receiving beam and an adjacent receiving beam. The receiving beam pattern information represents distribution of the receiving beam indices or the receiving beam directions in a first dimension or a second dimension. In other words, through the specific presentation of the RMI about the reference signal resources above, the RMI about the reference signal resources can be well and accurately represented.

It may be understood that if the reference signal sources are configured in all the beam transmission directions, the method for beam management according to an embodiment of the present disclosure may further include, but is not limited to, at least one of the following:
transmitting sampling indication information for the reference signal resources to the receiving apparatus, where the sampling indication information for the reference signal resources is used for indicating, to the receiving apparatus, sampling parameters of to-be-measured reference signal resources;
associating each of the reference signal resources with a corresponding sampling subset index, specifying the reference signal resources with the same sampling subset index as the to-be-measured reference signal resources, and transmitting sampling subset index information of the to-be-measured reference signal resources to the receiving apparatus;
transmitting first measurement adjustment information to the receiving apparatus, where the first measurement adjustment information is used for indicating to the receiving apparatus to switch the to-be-measured reference signal resources; or
transmitting second measurement adjustment information to the receiving apparatus, where the second measurement adjustment information is used for indicating the inhibition of the switch of the to-be-measured reference signal resources to the receiving apparatus.

It is to be noted that when the reference signal sources are configured in all the beam transmission directions, in consideration of beam training overhead, the user apparatus may not sweep and measure all the reference signal resources. Therefore, indication information for sweeping and measuring the reference signal resources is transmitted to the user apparatus, such that the user apparatus determines the to-be-measured reference signal resources according to the indication information. In other words, the sampling indication information is used to indicate sampling parameters of the to-be-measured reference signal resources (including, but not limited to, a sampling position, a sampling interval, a sampling pattern, and the like). Alternatively, information of sampling subset indices corresponding to the to-be-measured reference signal resources is used to indicate the to-be-measured reference signal resources. Alternatively, the first measurement adjustment information is used to instruct to switch the to-be-measured reference signal resources. Alternatively, the second measurement adjustment information is used to instruct the inhibition of the switch of the to-be-measured reference signal resources. As such, the user apparatus can determine the to-be-measured reference signal resources based on the above indication information and then measure the reference signal resources. The association of each reference signal resource with the corresponding sampling subset index can be used for coordinately indicating a set of reference signal resources needing to be measured by the user apparatus. In other words, the reference signal resources with the same sampling subset index may form a reference signal resource sampling subset. The reference signal resource sampling subset is the reference signal resources to be measured by the user apparatus.

In an embodiment of the present disclosure, operation S130 is further described. When the beam measurement information includes the RMI about the reference signal resources, S130 may include, but is not limited to, an operation S131. S131 includes at least one of:
receiving CSI transmitted by the receiving apparatus, where the CSI includes the RMI about the reference signal resources;
receiving CSI transmitted by the receiving apparatus, where the CSI includes timestamp information of the reference signal resources, and the timestamp information of the reference signal resource corresponds to the RMI about the reference signal resources;
receiving CSI transmitted by the receiving apparatus, where the CSI includes index information of the reference signal resources, and the index information of the reference signal resources corresponds to the RMI about the reference signal resources;
receiving CSI transmitted by the receiving apparatus, where the CSI includes index information of a resource set where the reference signal resources are located, and the index information of the resource set where the reference signal resources are located corresponds to the RMI about the reference signal resources;
receiving CSI transmitted by the receiving apparatus, where the CSI includes Transmission Configuration Indicator (TCI) information of the reference signal resources, and the TCI information of the reference signal resources corresponds to the RMI about the reference signal resources;
receiving CSI transmitted by the receiving apparatus, where the CSI includes remaining source signals quasi-co-located (QCL) with the reference signal resources, and the remaining source signals quasi-co-located with the reference signal resources correspond to the RMI about the reference signal resources;
receiving CSI transmitted by the receiving apparatus, where the CSI includes Sounding Reference Signal (SRS) resource, and the SRS resource corresponds to the RMI about the reference signal resources; or
receiving CSI transmitted by the receiving apparatus, where the CSI includes SRS Resource Indicator (SRI) information, and the SRI information corresponds to the RMI about the reference signal resources.

In this operation, when the beam measurement information includes the RMI about the reference signal resources, the base station can receive the RMI about the reference signal resources transmitted by the user apparatus, so as to predict the optimal beam result based on the received RMI about the reference signal resources in a subsequent operation.

It is to be noted that receiving CSI which is transmitted by the receiving apparatus and includes the RMI about the reference signal resources is explicit feedback, through which the RMI about the reference signal resources can be directly transmitted to the base station.

In an implementation, when beams on the side of the base station and the side of the user apparatus are not calibrated, the base station may configure a CSI-RS resource set for beam management and repeat the transmission multiple times, and the user apparatus receives beams in different cycles of the CSI-RS resource set in a Round-Robin manner. In this case, timestamp information of the CSI-RS resource set implicitly indicates different receiving beams of the UE. For example, a system frame number or a subframe number or a timeslot index or an OFDM symbol index corresponding to a CSI-RS Resource Index (CRI)/SSB Resource Index (SSBRI) is defined as Resource Indexing Type (RIT). The user apparatus binds the RMI about the reference signal resources with the RIT to form CRI-RSRP-RIT or SSBRI-RSRP-RIT and feeds back the corresponding CRI-RSRP-RIT or SSBRI-RSRP-RIT in a CSI report.

In another implementation, when the beams on the side of the base station and the side of the user apparatus are not calibrated, the base station may configure a plurality of CSI-RS resource sets for beam management, and the user apparatus receives beams for different CSI-RS resource sets in a Round-Robin manner. In this case, indexes of the CSI-RS resource sets implicitly indicate different receiving beams of the UE. For example, indices of the plurality of resource sets for beam management are defined as Resource Set Index (RSI), and the UE binds the RMI with the RSI and feeds back corresponding CRI-RSRP-RSI or SSBRI-RSRP-RSI in a CSI report.

In another implementation, in an uplink direction, the user apparatus transmits the SRS resources by means of different beams. The user apparatus binds the RMI with the SRI, indicating that the RMI adopts a spatial filter used by the SRS resources indicated by the SRI. For example, in order to realize the reporting of the RMI, the user apparatus feeds back corresponding CRI-RSRP-SRI or SSBRI-RSRP-SRI in a CSI report.

In another feasible implementation, in an uplink direction, the user apparatus transmits the SRS resources by means of different beams. The user apparatus binds the RMI with the SRS resources transmitted by means of different beams, indicating that the RMI and the SRS resources adopt the same spatial filter. For example, the SRS resource that adopts the same spatial filter as the RMI is defined as SRS0. In order to realize the reporting of the RMI, the user apparatus feeds back corresponding CRI-RSRP-SRS0 or SSBRI-RSRP-SRS0 in a CSI report.

In another implementation, the base station may configure a TCI as {CSI-RS0|QCL type D}, where CSI-RS0 represents QCL source signals, and QCL type D indirectly indicates the receiving beams of the UE. Therefore, QCL-type-D source signals indicating different receiving beams are defined as CRI0, and the UE binds the RMI with different CRI0 and feeds back corresponding CRI-RSRP-CRI0 or SSBRI-RSRP-CRI0 in a CSI report.

At S140, an optimal beam result is predicted according to the beam measurement information.

In this operation, since the beam measurement information transmitted by the user apparatus has been received in S130, the optimal beam result can be accurately and reliably predicted according to the beam measurement information.

It is to be noted that the optimal beam result may be predicted in a variety of manners, which is not limited herein. For example, prediction is performed based on an Artificial Intelligence (AI) model that has been trained and embedded in the base station. Since the RMI about the reference signal resources, such as receiving beam directions and receiving beam indices may assist in AI-based beam prediction on the side of the base station, prediction based on the RMI about the reference signal resources can enhance robustness and generalization of the AI model. In another example, a human operator inputs the received beam measurement information into a trained beam prediction network inside the base station, thereby obtaining an optimal beam result outputted by the beam prediction network.

It is to be noted that the optimal beam result includes at least one of:
at least one optimal beam pair; or
at least one beam pair adjacent to at least one optimal beam pair.

In other words, the optimal beam result may be, but is not limited to, one or more optimal beam pairs, and each optimal beam pair includes an optimal transmitting beam and an optimal receiving beam, which is selected and set according to an actual application scenario and is not limited herein.

At S150, optimal RMI is transmitted to the receiving apparatus according to the optimal beam result.

It is to be noted that the optimal RMI corresponds to the optimal beam result.

In this operation, the base station transmits a plurality of target test beams configured with reference signal resources, to the user apparatus. Since the plurality of target test beams are obtained by configuring the reference signal resources in at least part of all beam transmission directions, that is, there is no need to perform beam sweeping configuration in all the beam transmission directions to obtain the target test beams. Hence, it is conducive to reducing beam training overhead and corresponding measurement power consumption and processing latency. Then, beam measurement information obtained by measuring the reference signal resources by the user apparatus is received. The beam measurement information is used for assisting the base station in predicting an accurate and reliable optimal beam result. Moreover, optimal RMI corresponding to the optimal beam result is transmitted to the user apparatus, such that the receiving apparatus does not need to perform a sweeping process for the optimal beam result, thereby filling technical gaps in related methods.

As shown in FIG. 4, in an embodiment of the present disclosure, S150 is further described, which may include, but is not limited to, the following operations S151 and S152.

At S151, the optimal RMI is configured for a first downlink signal according to the optimal beam result.

At S152, the optimal RMI is transmitted to the receiving apparatus through the first downlink signal.

In this operation, the optimal RMI is configured for the first downlink signal, such that the optimal RMI is transmitted to the user apparatus through the first downlink signal. In other words, the user apparatus can obtain the optimal RMI by receiving the first downlink signal, which can prevent disadvantages of independently transmitting the optimal RMI.

It is to be noted that specific parameters of the first downlink signal may be set according to a specific application scenario, which is not limited herein.

In an embodiment of the present disclosure, when the optimal beam result corresponds to a plurality of pieces of candidate RMI, S512 is further described, which may include, but not limited to, an operation S1521. Operation S1521 includes at least one of:
selecting, according to the optimal beam result, one of the plurality of pieces of candidate RMI as the optimal RMI through Radio Resource Control (RRC) signaling, and associating the optimal RMI with the first downlink signal;
selecting, according to the optimal beam result, a plurality of pieces of target RMI from the plurality of pieces of candidate RMI through RRC signaling, selecting one of the plurality of pieces of target RMI as the optimal RMI through Medium Access Control (MAC) Control Element (MAC CE) signaling, and configuring the optimal RMI for the first downlink signal;
configuring, according to the optimal beam result, a state pool including the plurality of pieces of candidate RMI through RRC signaling, acquiring a plurality of pieces of target RMI from the state pool through MAC CE signaling, selecting one of the plurality of pieces of target RMI as the optimal RMI through downlink control information (DCI) signaling, and configuring the optimal RMI for the first downlink signal; or
determining the optimal RMI from the plurality of pieces of candidate RMI according to the optimal beam result, and configuring the optimal RMI for the first downlink signal through explicit signaling.

It is to be noted that one of the plurality of pieces of candidate RMI is selected as the optimal RMI, and the optimal RMI is explicitly or implicitly associated with the first downlink signal, such that the first downlink signal can be configured with the selected optimal RMI. In other words, the user apparatus can obtain the optimal RMI by receiving the first downlink signal, which can prevent disadvantages of independently transmitting the optimal RMI.

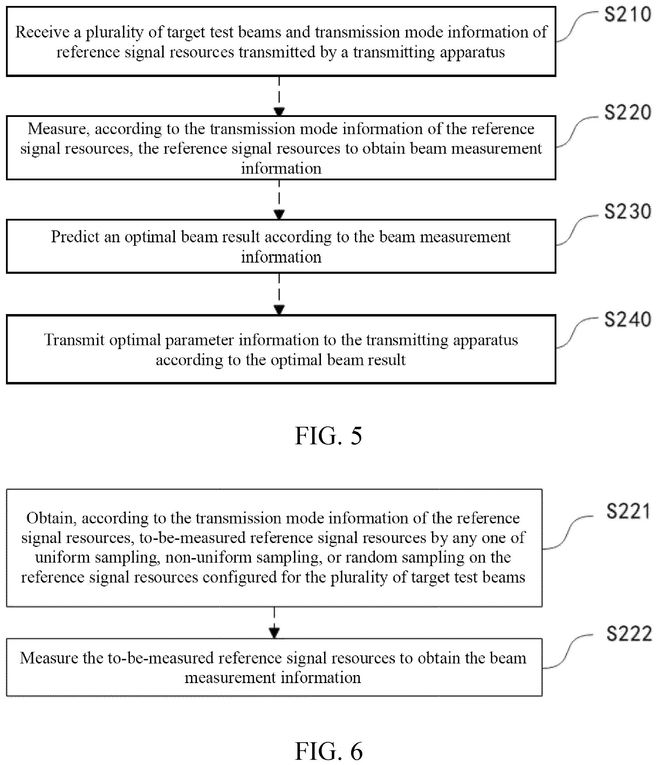

FIG. 5 is a flowchart of a method for beam management according to another embodiment of the present disclosure. The method is applied to a receiving apparatus, for example, the user apparatus 120 in the embodiment shown in FIG. 1. The method may include, but not limited to, the following steps S210 to S240.

At S210, a plurality of target test beams, and Transmitting Mode Information (TMI) of reference signal resources transmitted by a transmitting apparatus are received.

It is to be noted that the plurality of target test beams are obtained by configuring the reference signal resources in at least part of all beam transmission directions by the transmitting apparatus.

It is to be noted that the receiving apparatus in this embodiment may be, but not limited to, the user apparatus 120 in the embodiment shown in FIG. 1, and the transmitting apparatus in this embodiment may be, but not limited to, the base station 110 in the embodiment shown in FIG. 1. Alternatively, those having ordinary skills in the art may selectively set the corresponding transmitting apparatus or receiving apparatus according to an actual application scenario, which is not limited in this embodiment. In order to more conveniently describe the application scenarios and principles of the present disclosure, the following relevant embodiments are described with the base station as the transmitting apparatus and the user apparatus as the receiving apparatus. However, this should not be understood as a limitation to the embodiments of the present disclosure.

In this operation, for the base station, the plurality of target test beams are obtained by configuring the reference signal resources in at least part of all the beam transmission directions, that is, there is no need to perform beam sweeping configuration in all the beam transmission directions to obtain the target test beams. Therefore, it is conducive to reducing beam training overhead on the side of the base station and power consumption and processing latency for measuring the target test beams in a subsequent operation. The user apparatus can receive the plurality of target test beams and the TMI about the reference signal resources transmitted by the base station, so as to measure the reference signal resources according to the TMI about the reference signal resources in a subsequent operation.

It is to be noted that the transmitting apparatus may have a plurality of beam transmission directions, which is determined by preset operating logic or based on control of the operator. When the transmitting apparatus has determined all the beam transmission directions, the transmitting apparatus may select at least part of the beam transmission directions. In other words, configuration may be performed in two cases where part or all of the beam transmission directions are selected to obtain the plurality of target test beams.

It is to be noted that the plurality of target test beams may be different from one another to simulate different beam sweeping situations. A specific number of the target test beams may be set according to an actual application scenario, which is not limited herein.

It is to be noted that the reference signal resources include at least one of:
CSI-RS resources; or
SSB resources.

In other words, the configured reference signal resources may be CSI-RS resources or/and SSB resources. Measurement of transmitting beams and sweeping of receiving beams are implemented by configuring the above resources.

In an implementation, the TMI of the reference signal resources includes at least one of:
transmitting beam index information corresponding to the plurality of target test beams;
absolute transmitting beam direction information corresponding to the plurality of target test beams;
relative transmitting beam direction information corresponding to the plurality of target test beams; or
transmitting beam pattern information corresponding to the plurality of target test beams.

It is to be noted that, for the base station, the transmitting beam index information corresponding to the plurality of target test beams represents index information of the transmitted target test beams. The absolute transmitting beam direction information may be, but is not limited to, information such as specific positions, coordinates, and angles of the transmitted target test beams in spatial domain. The relative transmitting beam direction information represents an angle difference between the transmitting beam and a preset baseline direction or an angle difference between the transmitting beam and an adjacent transmitting beam. The transmitting beam pattern information represents distribution of transmitting beam indices or the transmitting beam directions in a first dimension or a second dimension. In other words, through the specific presentation of the TMI about the reference signal resources above, the TMI about the reference signal resources can be well and accurately represented.

In an embodiment of the present disclosure, "receiving the TMI of reference signal resources transmitted by a transmitting apparatus" at S210 is further described, which may include, but is not limited to, an operation S211.

At S211, the TMI of the reference signal resources transmitted by the transmitting apparatus through a second downlink signal is received.

It is to be noted that the second downlink signal is configured with the TMI about the reference signal resources.

In this operation, the TMI about the reference signal resources is configured for the second downlink signal, such that the TMI about the reference signal resources is transmitted to the user apparatus through the second downlink signal. In other words, the user apparatus may obtain the TMI about the reference signal resources by receiving the second downlink signal, which can prevent disadvantages of separately transmitting the TMI about the reference signal resources.

At S220, the reference signal resources are measured according to the TMI about the reference signal resources to obtain beam measurement information.

In this operation, since the user apparatus has obtained the plurality of target test beams and the TMI about the reference signal resources at S210, the reference signal resources may be measured according to the TMI about the reference signal resources to obtain the beam measurement information at S220, so as to predict an optimal beam result according to the TMI and the beam measurement information in a subsequent operation to enhance accuracy of the user apparatus in predicting the optimal beam result.

As shown in FIG. 6, in an embodiment of the present disclosure, S220 is further described. S220 may include, but is not limited to, the following operations S221 and S222.

At S221, to-be-measured reference signal resources are obtained according to the TMI about the reference signal resources by any one of uniform sampling, non-uniform sampling, or random sampling on the reference signal resources configured for the plurality of target test beams.

At S222, the to-be-measured reference signal resources are measured to obtain the beam measurement information.

In this operation, any one of uniform sampling, non-uniform sampling, and or sampling is adopted according to the TMI about the reference signal resources, so as to accurately determine the to-be-measured reference signal resources in any sampling method. In other words, measurement of reference signal resources not needing to be measured in a subsequent operation is prevented, such that the to-be-measured reference signal resources can be measured to obtain the desired beam measurement information.

In an embodiment of the present disclosure, before S222, the method may further include, but is not limited to, an operation S250 of maintaining a timer.

At S250, the to-be-measured reference signal resources are switched when a timer expires.

In this operation, the user apparatus may maintain a timer, and when the timer expires, the user apparatus may switch the to-be-measured reference signal resources so as to measure the reference signal resources needing to be measured. Alternatively, the to-be-measured reference signal resources may be switched according to received explicit or implicit switching indication information transmitted by the base station. The switching indication information has been described in detail in the embodiment of the base station side and may be obtained with reference to the content in the relevant embodiment above, so details will not be described herein to avoid redundancy.

At S230, an optimal beam result is predicted according to the beam measurement information.

In this operation, since the reference signal resources have been measured to obtain the beam measurement information at S220, the optimal beam result can be accurately and reliably predicted according to the beam measurement information.

It is to be noted that the optimal beam result may be predicted in a variety of manners, which is not limited herein. For example, prediction is performed based on an AI model that has been trained and implanted in the user apparatus, since the TMI about the reference signal resources such as transmitting beam directions and transmitting beam indexes may assist in AI-based beam prediction on the side of the user apparatus, prediction based on the TMI about the reference signal resources can enhance robustness and generalization of the AI model. In another example, a human operator inputs the beam measurement information obtained by measurement into a trained beam prediction network inside the user apparatus, thereby obtaining an optimal beam result outputted by the beam prediction network.

It is to be noted that the optimal beam result includes at least one of:
at least one optimal beam pair; or
at least one beam pair adjacent to the at least one optimal beam pair.

In other words, the optimal beam result may be, but is not limited to, one or more optimal beam pairs, and each optimal beam pair includes an optimal transmitting beam and an optimal receiving beam, which is selected and set according to an actual application scenario and is not limited herein.

At S240, optimal parameter information is transmitted to the transmitting apparatus according to the optimal beam result.

It is to be noted that the optimal parameter information corresponds to the optimal beam result.

In this operation, the user apparatus receives a plurality of target test beams configured with reference signal resources, and the TMI about the reference signal resources. Since the plurality of target test beams are obtained by configuring the reference signal resources in at least part of all beam transmission directions, that is, there is no need to perform beam sweeping configuration in all the beam transmission directions to obtain the target test beams, it is conducive to reducing beam training overhead and corresponding measurement power consumption and processing latency. Then, beam measurement information is obtained by the user apparatus by measuring the reference signal resources based on the TMI about the reference signal resources. The beam measurement information is used for assisting the user apparatus in predicting an accurate and reliable optimal beam result. Moreover, optimal parameter information corresponding to the optimal beam result is transmitted to the base station, such that the base station does not need to perform a sweeping process for the optimal beam result according to the optimal parameter information, thereby filling technical gaps in related methods.

It is to be noted that the optimal parameter information includes at least one of:
index information of a target signal resource corresponding to the optimal beam result;
parameter information of the optimal beam result; or
TMI about the target signal resource.

When the optimal parameter information includes the parameter information of the optimal beam result, the parameter information of the optimal beam result includes at least one of:
RSRP;
RSRQ;
receiving signals of the reference signal resources;
SNR;
SINR; or
CSI.

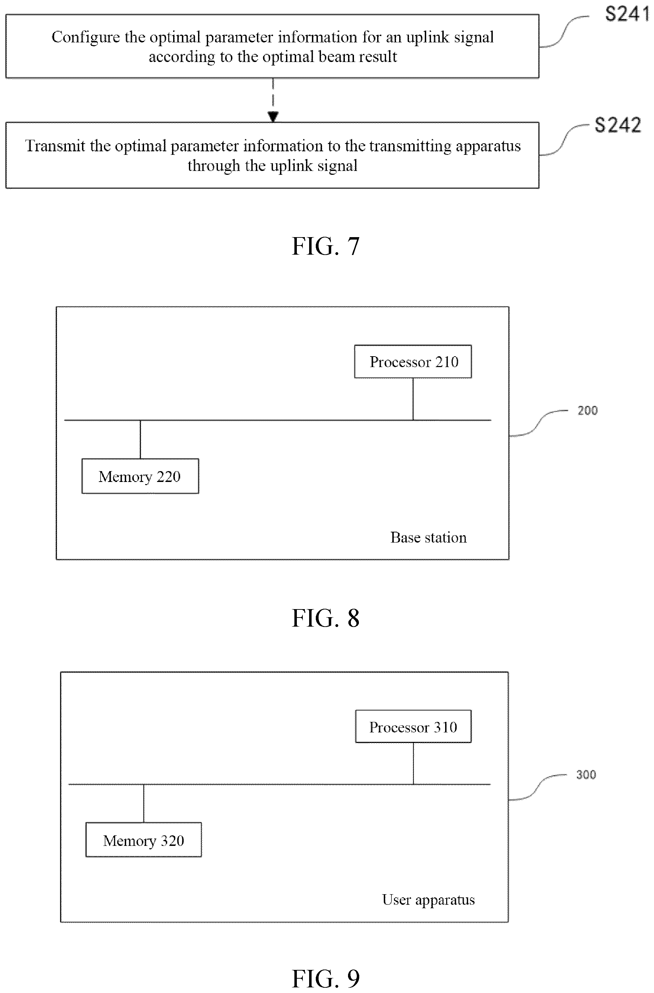

As shown in FIG. 7, in an embodiment of the present disclosure, S240 is further described. S240 may include, but not limited to, the following operations S241 and S242.

At S241, the optimal parameter information is configured for an uplink signal according to the optimal beam result.

At S242, the optimal parameter information is transmitted to the transmitting apparatus through the uplink signal.

In this operation, the user apparatus configures the optimal parameter information to the uplink signal, so as to transmit the optimal parameter information to the base station through the uplink signal. In other words, the base station may obtain the optimal parameter information by receiving the uplink signal, which can prevent disadvantages of separately transmitting the optimal parameter information.

It is to be noted that specific parameters of the first downlink signal may be set according to a specific application scenario, which is not limited herein.

In an embodiment of the present disclosure, when the optimal beam result corresponds to a plurality of pieces of candidate parameter information, S242 is further described which may include, but is not limited to, an operation S2421. S2421 includes at least one of:
selecting, according to the optimal beam result, one of the plurality of pieces of candidate parameter information as the optimal parameter information through RRC signaling, and associating the optimal parameter information with the uplink signal;
selecting, according to the optimal beam result, a plurality of pieces of target parameter information from the plurality of pieces of candidate parameter information through RRC signaling, selecting one of the plurality of pieces of target parameter information as the optimal parameter information through MAC CE signaling, and configuring the optimal parameter information to the uplink signal;
configuring, according to the optimal beam result, a state pool including the plurality of pieces of candidate parameter information through RRC signaling, acquiring a plurality of pieces of target parameter information from the state pool through MAC CE signaling, selecting one of the plurality of pieces of target parameter information as the optimal parameter information through downlink control information (DCI) signaling, and configuring the optimal parameter information to the uplink signal; or
determining, according to the optimal beam result, the optimal parameter information from the plurality of pieces of candidate parameter information, and configuring the optimal parameter information to the uplink signal through explicit signaling.

It is to be noted that one of the plurality of pieces of candidate parameter information is selected as the optimal parameter information, and the optimal parameter information is explicitly or implicitly associated with the uplink signal, such that the uplink signal can be configured with the selected optimal parameter information. In other words, the base station can obtain the optimal parameter information by receiving the uplink signal, which can prevent disadvantages of separately transmitting the optimal parameter information.

In addition, as shown in FIG. 8, an embodiment of the present disclosure discloses a base station 200. The base station 200 includes: at least one processor 210; at least one memory 220 configured to store at least one program, where the at least one program, when executed by the at least one processor 210, causes the at least one processor 210 to implement the operations S110 to S150 in FIG. 2, operations S113 to S112 in FIG. 3, operation S131, and operations S151 to S152 or operation S1521 in FIG. 4 in the method as described in any one of the foregoing embodiments.

In addition, as shown in FIG. 9, an embodiment of the present disclosure discloses a user apparatus 300. The user apparatus 300 includes: at least one processor 310; at least one memory 320 configured to store at least one program, where the at least one program, when executed by the at least one processor 310, causes the at least one processor 310 to implement the operations S210 to S240 in FIG. 5, operation S211, operations S221 to S222 in FIG. 6, operation S250, and operations S241 to S242 or S2421 in FIG. 7 in the method as described in any one of the foregoing embodiments.

In addition, an embodiment of the present disclosure discloses a computer-readable storage medium, storing a computer-executable instruction which, when executed by a processor, causes the processor to implement the method for beam management as described in any one of the foregoing embodiments.

In addition, an embodiment of the present disclosure provides a computer program product, including a computer program or a computer instruction stored in a computer-readable storage medium which, when read from the computer-readable storage medium and executed by a processor of a computer device, causes the computer device to implement the method for beam management as described in any one of the foregoing embodiments.

Those having ordinary skills in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable, and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A method for beam management, applied to a transmitting apparatus, comprising:
configuring reference signal resources in at least part of all beam transmission directions to obtain a plurality of target test beams;
transmitting the plurality of target test beams to a receiving apparatus;
receiving beam measurement information transmitted by the receiving apparatus, wherein the beam measurement information is obtained by measuring the reference signal resources by the receiving apparatus;
predicting an optimal beam result according to the beam measurement information; and
transmitting optimal Receiving Mode Information (RMI) to the receiving apparatus according to the optimal beam result, wherein the optimal RMI corresponds to the optimal beam result.

2. The method of claim 1, wherein the reference signal resources comprise at least one of:
Channel State Information Reference Signal (CSI-RS) resources; or
Synchronization Signal and Physical Broadcast Channel (PBCH) Block (SSB) resources.

3. The method of claim 1, wherein the beam measurement information comprises at least one of:
index information of the reference signal resources;
parameter information of the target test beams; or
RMI about the reference signal resources.

4. The method of claim 3, wherein in response to an inclusion of the parameter information of the target test beams within the beam measurement information, the parameter information of the target test beams comprises at least one of:
Reference Signal Receiving Power (RSRP);
Reference Signal Receiving Quality (RSRQ);
receiving signals of the reference signal resources;
Signal to Noise Ratio (SNR);
Signal to Interference plus Noise Ratio (SINR); or
Channel State Information (CSI).

5. The method of claim 3, wherein in response to an inclusion of the RMI about the reference signal resources within the beam measurement information, the RMI about the reference signal resources comprises at least one of:
receiving beam index information corresponding to the plurality of target test beams;
absolute receiving beam direction information corresponding to the plurality of target test beams;
relative receiving beam direction information corresponding to the plurality of target test beams; or
receiving beam pattern information corresponding to the plurality of target test beams.

6. The method of claim 1, wherein the optimal beam result comprises at least one of:
at least one optimal beam pair; or
at least one beam pair adjacent to the at least one optimal beam pair.

7. The method of claims 1 or 6, wherein transmitting the optimal RMI to the receiving apparatus according to the optimal beam result comprises:
configuring a first downlink signal with the optimal RMI according to the optimal beam result; and
transmitting the optimal RMI to the receiving apparatus through the first downlink signal.

8. The method of claim 7, wherein the optimal beam result corresponds to a plurality of pieces of candidate RMI; and
configuring the first downlink signal with the optimal RMI according to the optimal beam result comprises at least one of:
selecting, according to the optimal beam result, one of the plurality of pieces of candidate RMI as the optimal RMI through Radio Resource Control (RRC) signaling, and associating the optimal RMI with the first downlink signal;
selecting, according to the optimal beam result, a plurality of pieces of target RMI from the plurality of pieces of candidate RMI through RRC signaling, selecting one of the plurality of pieces of target RMI as the optimal RMI through Medium Access Control (MAC) Control Element (MAC CE) signaling, and configuring the first downlink signal with the optimal RMI;
configuring, according to the optimal beam result, a state pool comprising the plurality of pieces of candidate RMI through RRC signaling, acquiring a plurality of pieces of target RMI from the state pool through MAC CE signaling, selecting one of the plurality of pieces of target RMI as the optimal RMI through downlink control information (DCI) signaling, and configuring the first downlink signal with the optimal RMI; or
determining the optimal RMI from the plurality of pieces of candidate RMI according to the optimal beam result, and configuring the first downlink signal with the optimal RMI through explicit signaling.

9. The method of claim 1, wherein in response to an inclusion of the RMI about the reference signal resource within the beam measurement information, receiving the beam measurement information transmitted by the receiving apparatus comprises at least one of:
receiving CSI transmitted by the receiving apparatus, wherein the CSI comprises the RMI about the reference signal resources;
receiving CSI transmitted by the receiving apparatus, wherein the CSI comprises timestamp information of the reference signal resources, and the timestamp information of the reference signal resource corresponds to the RMI about the reference signal resources;
receiving CSI transmitted by the receiving apparatus, wherein the CSI comprises index information of the reference signal resources, and the index information of the reference signal resources corresponds to the RMI about the reference signal resources;
receiving CSI transmitted by the receiving apparatus, wherein the CSI comprises index information of a resource set where the reference signal resources are located, and the index information of the resource set where the reference signal resources are located corresponds to the RMI about the reference signal resources;
receiving CSI transmitted by the receiving apparatus, wherein the CSI comprises Transmission Configuration Indicator (TCI) information of the reference signal resources, and the TCI information of the reference signal resources corresponds to the RMI about the reference signal resources;
receiving CSI transmitted by the receiving apparatus, wherein the CSI comprises remaining source signals quasi-co-located with the reference signal resources, and the remaining source signals quasi-co-located with the reference signal resources correspond to the RMI about the reference signal resources;
receiving CSI transmitted by the receiving apparatus, wherein the CSI comprises Sounding Reference Signal (SRS) resource, and the SRS resource corresponds to the RMI about the reference signal resources; or
receiving CSI transmitted by the receiving apparatus, wherein the CSI comprises SRS Resource Indicator (SRI) information, and the SRI information corresponds to the RMI about the reference signal resources.

10. The method of claim 1, wherein in response to configuring the reference signal sources in part of all the beam transmission directions, configuring reference signal resources in at least part of all beam transmission directions to obtain the plurality of target test beams comprises:
obtaining, from all the beam transmission directions, target transmission directions by one of uniform sampling, non-uniform sampling, or random sampling; and
configuring the reference signal resources in the target transmission directions to obtain the plurality of target test beams.

11. The method of claim 1, wherein in response to configuring the reference signal resources in all the beam transmission directions, the method further comprises at least one of:
transmitting sampling indication information for the reference signal resources to the receiving apparatus, wherein the sampling indication information for the reference signal resources is used for indicating, to the receiving apparatus, sampling parameters of to-be-measured reference signal resources;
associating each of the reference signal resources with a corresponding sampling subset index, specifying the reference signal resources with the same sampling subset index as the to-be-measured reference signal resources, and transmitting sampling subset index information of the to-be-measured reference signal resources to the receiving apparatus;
transmitting first measurement adjustment information to the receiving apparatus, wherein the first measurement adjustment information is used for instructing the receiving apparatus to switch the to-be-measured reference signal resources; or
transmitting second measurement adjustment information to the receiving apparatus, wherein the second measurement adjustment information is used for instructing an inhibition of switching the to-be-measured reference signal resources to the receiving apparatus.

12. A method for beam management, applied to a receiving apparatus, comprising:
receiving a plurality of target test beams, and Transmission Mode Information (TMI) about reference signal resources transmitted by a transmitting apparatus, wherein the plurality of target test beams are obtained by configuring the reference signal resources in at least part of all beam transmission directions by the transmitting apparatus;
measuring, according to the TMI about the reference signal resources, the reference signal resources to obtain beam measurement information;
predicting an optimal beam result according to the beam measurement information; and
transmitting optimal parameter information to the transmitting apparatus according to the optimal beam result, wherein the optimal parameter information corresponds to the optimal beam result.

13. The method of claim 12, wherein the reference signal resources comprise at least one of:
Channel State Information Reference Signal (CSI-RS) resources; or
Synchronization Signal and Physical Broadcast Channel (PBCH) Block (SSB) resources.

14. The method of claim 12, wherein the TMI about the reference signal resources comprises at least one of:
transmitting beam index information corresponding to the plurality of target test beams;
absolute transmitting beam direction information corresponding to the plurality of target test beams;
relative transmitting beam direction information corresponding to the plurality of target test beams; or
transmitting beam pattern information corresponding to the plurality of target test beams.

15. The method of claim 12, wherein the optimal beam result comprises at least one of:
at least one optimal beam pair; or
at least one beam pair adjacent to the at least one optimal beam pair.

16. The method of claim 12, wherein the optimal parameter information comprises at least one of:
index information of a target signal resource corresponding to the optimal beam result;
parameter information of the optimal beam result; or
TMI about the target signal resource.

17. The method of claim 16, wherein in response to an inclusion of the parameter information of the optimal beam result within the optimal parameter information, the parameter information of the optimal beam result comprises at least one of:
Reference Signal Receiving Power (RSRP);
Reference Signal Receiving Quality (RSRQ);
receiving signals of the reference signal resources;
Signal to Noise Ratio (SNR);
Signal to Interference plus Noise Ratio (SINR); or
Channel State Information (CSI).

18. The method of claims 12 or 16, wherein transmitting optimal parameter information to the transmitting apparatus according to the optimal beam result comprises:
configuring an uplink signal with the optimal parameter information according to the optimal beam result; and
transmitting the optimal parameter information to the transmitting apparatus through the uplink signal.

19. The method of claim 18, wherein the optimal beam result corresponds to a plurality of pieces of candidate parameter information; and
configuring the uplink signal with the optimal parameter information according to the optimal beam result comprises at least one of:
selecting, according to the optimal beam result, one of the plurality of pieces of candidate parameter information as the optimal parameter information through Radio Resource Control (RRC) signaling, and associating the optimal parameter information with the uplink signal;
selecting, according to the optimal beam result, a plurality of pieces of target parameter information from the plurality of pieces of candidate parameter information through RRC signaling, selecting one of the plurality of pieces of target parameter information as the optimal parameter information through Medium Access Control (MAC) Control Element (MAC CE) signaling, and configuring the uplink signal with the optimal parameter information;
configuring, according to the optimal beam result, a state pool comprising the plurality of pieces of candidate parameter information through RRC signaling, acquiring a plurality of pieces of target parameter information from the state pool through MAC CE signaling, selecting one of the plurality of pieces of target parameter information as the optimal parameter information through downlink control information (DCI) signaling, and configuring the uplink signal with the optimal parameter information; or
determining, according to the optimal beam result, the optimal parameter information from the plurality of pieces of candidate parameter information, and configuring the uplink signal with the optimal parameter information through explicit signaling.

20. The method of claim 12, wherein receiving the TMI about the reference signal resources transmitted by the transmitting apparatus comprises:
receiving the TMI about the reference signal resources transmitted by the transmitting apparatus through a second downlink signal, wherein the second downlink signal is configured with the TMI about the reference signal resources.

21. The method of claim 12, wherein measuring, according to the TMI about the reference signal resources, the reference signal resources to obtain the beam measurement information comprises:
obtaining, according to the TMI about the reference signal resources, to-be-measured reference signal resources by one of uniform sampling, non-uniform sampling, or random selection on the reference signal resources configured for the plurality of target test beams; and
measuring the to-be-measured reference signal resources to obtain the beam measurement information.

22. The method of claim 21, wherein before measuring the to-be-measured reference signal resources to obtain the beam measurement information, the method further comprises,
maintaining a timer; and
switching the to-be-measured reference signal resources in response to an expiration of the timer.

23. A base station, comprising:
at least one processor; and
at least one memory configured to store at least one program;
wherein at least one program, when executed by the at least one processor, causes the at least one processor to perform the method of any one of claims 1 to 11.

24. A user apparatus, comprising:
at least one processor; and
at least one memory configured to store at least one program;
wherein the at least one program, when executed by the at least one processor, causes the at least one processor to perform the method of any one of claims 12 to 22.

25. A computer-readable storage medium, storing a processor-executable program which, when executed by a processor, causes the processor to perform the method of any one of claims 1 to 22.

26. A computer program product, comprising a computer program or a computer instruction stored in a computer-readable storage medium which, when read from the computer-readable storage medium and executed by a processor of a computer device, causes the computer device to perform the method of any one of claims 1 to 22.
